# EUROPÄISCHE PATENTSCHRIFT

(11) **EP 3 422 511 B1**
(45) Veröffentlichungstag und Bekanntmachung des Hinweises auf die Patenterteilung: **05.08.2020**
(21) Anmeldenummer: 18178738.3
(22) Anmeldetag: 20.06.2018
(51) Int. Cl.: H02G 11/02, B65H 75/44, B65H 75/40

(54) **KABELTROMMEL**
CABLE REEL
TAMBOUR POUR CÂBLE

(30) Priorität: 30.06.2017 DE 102017114693
(43) Veröffentlichungstag der Anmeldung: 02.01.2019
(73) Patentinhaber: Adolf Würth GmbH & Co. KG, 74653 Künzelsau (DE); Würth International AG, 7000 Chur (CH)
(72) Erfinder: Reuther, Herbert, 74238 Gommersdorf (DE); Stepper, Frank, 74589 Satteldorf (DE)
(74) Vertreter: Dilg, Haeusler, Schindelmann Patentanwaltsgesellschaft mbH

(56) Entgegenhaltungen:
- DE-A1-102013 221 652
- DE-A1-102014 000 777
- DE-U1-202010 006 180
- GB-A- 2 469 460

## Beschreibung

Die Erfindung betrifft einen Leitungsroller, auch Kabeltrommel genannt.

Kabeltrommeln weisen ein Kabel mit einem Stecker auf, das auf einer Trommel aufgerollt werden kann. Um ein Kabel aufzurollen, betätigt ein Benutzer einen Drehkörper, an dem eine mit dem Kabel verbundene Steckdose vorgesehen ist.

Wenngleich die beschriebene Kabeltrommel für verschiedene Anwendungen sehr leistungsstark ist, ist der im Betrieb in einer Umgebung mit einem Sicherheitsrisiko für einen Benutzer verbunden, in der Flüssigkeiten, beispielsweise Regen- oder Spritzwasser, in Kontakt mit der Kabeltrommel gelangen können. Dadurch kann es zu Kurzschlüssen in der Kabeltrommel und zu einer Gefährdung eines Benutzers kommen.

DE 10 2014 000 777 A1 offenbart eine Kabeltrommel mit integriertem Servoverstärker zur Steuerung eines externen Servomotors mit einem offenen Kühlsystem. Ein Kühlkörper besteht aus zwei einstückigen Gehäuseteilen mit an den Außenflächen angeformten Kühlrippen, die über einen, zwischen zwei Aufnahmestutzen der Gehäuseteile angeordneten wasser- oder luftführenden, lamellierten Hohlkörper wasserdicht oder luftdicht verbunden sind und einen ganzheitlichen, aktiven Kühlkörper bilden. Jeweils eine Abdeckkappe mit einem Wasserein- und -auslaufstutzen, sowie einer Leckagestelle für eine Wasserkühlung oder mit einem Lüfter für eine Luftkühlung ist in einen Aufnahmestutzen einzustecken. In den Gehäuseteilen der Kabeltrommel über dem lamellierten Hohlkörper ist ein Servoverstärker angeordnet, dessen Wärme abgebende Teile mit der axialen Außenwand des lamellierten Hohlkörpers kontaktierend verbunden sind.

DE 92 03 351 U1 offenbart eine Vorrichtung zum Aufwickeln von Kabeln oder dergleichen, mit einem Rahmengestell aus einem etwa U-förmig gebogenen Standbügel als Bodenteil und einem daran anschließenden Lagerbügel mit einer daran drehbar gelagerten Trommel und einem Tragegriff, gekennzeichnet durch eine zusätzliche Seitenstrebe sowie durch an dem Lagerbügel und der Seitenstrebe angebrachte lenkbare Laufrollen.

DE 299 06 919 U1 offenbart einen Kabelspuler für Bodenpflegegeräte wie Staubsauger, Saugpolierer, usw. mit geringer Bauhöhe, dadurch gekennzeichnet, dass die Wickelachse stehend angeordnet ist.

DE 10 2013 221 652 A1 offenbart ein tragbares Ladekabel zum Laden eines Energiespeichers eines elektrisch betriebenen Fahrzeugs, das einen Netzstecker, einen Ladestecker, ein Kabel und eine Steuereinheit umfasst. Das Ladekabel umfasst ferner eine in einem Gehäuse angeordnete Kabeltrommel, auf die das Kabel aufwickelbar ist, wenn das Ladekabel nicht zum Laden des Energiespeichers des Fahrzeugs verwendet wird.

DE 20 2010 006 180 U1 offenbart eine Kabeltrommel gemäß dem Oberbegriff von Anspruch 1.

DE 10 2014 000 777 A1 offenbart eine Kabeltrommel, die auf eine drehbare Achse eines Traggestells montiert ist. Ein Drehkörper der Kabeltrommel kann manuell gefasst und gedreht werden, um ein Kabel auf die Trommel aufzurollen. Der Drehkörper ist an seiner Stirnseite mit mehreren Steckdosen sowie radial verlaufenden Kühlrippen versehen. Die erhabenen Kühlrippen sind angrenzend aneinander und parallel zueinander derart angeordnet, dass zwischen ihnen jeweils eine Art Rinne gebildet ist. Bodenflächen der Rinnen sind trichterförmig so geneigt, dass eine Flüssigkeit zu den Steckdosen hingeführt wird.

Weitere Kabeltrommeln sind aus GB 2 469 460 A und DE 10 2013 221 652 A1 bekannt.

Es ist eine Aufgabe der vorliegenden Erfindung, eine Kabeltrommel bereitzustellen, die auch in einer Feuchtigkeit aufweisenden Umgebung betriebssicher eingesetzt werden kann und konstruktiv einfach gestaltet ist. Diese Aufgabe wird durch den Gegenstand gemäß dem unabhängigen Patentanspruch gelöst. Bevorzugte Ausgestaltungen ergeben sich aus den abhängigen Patentansprüchen.

Gemäß einem Ausführungsbeispiel der vorliegenden Erfindung ist eine Kabeltrommel (die auch als Leitungsroller bezeichnet werden kann) geschaffen, die ein Kabel (insbesondere ein isoliertes Stromkabel) mit einem Stecker (insbesondere einem Netzstecker, weiter insbesondere für 230 V Spannung, zum Einstecken in eine kabeltrommelexterne Steckdose), eine Trommel zum Aufrollen des Kabels, mindestens eine Steckdose, die mit dem Kabel elektrisch gekoppelt ist, einen Drehkörper, an dem die mindestens eine Steckdose angebracht und der derart betätigbar ist, dass mittels Betätigens des Drehkörpers das Kabel selektiv auf die Trommel aufrollbar (oder insbesondere von der Trommel abrollbar) ist, und (insbesondere durchgehend) offene (insbesondere einem Benutzer optisch und haptisch zugängliche) Ablaufrinnen an dem Drehkörper (insbesondere in einer Stirnfläche des Drehkörpers) zum Abführen von Flüssigkeit (insbesondere Wasser, zum Beispiel herabfallendes oder spritzendes Regenwasser) von dem Drehkörper aufweist.

Im Rahmen der vorliegenden Anmeldung kann unter einer "offenen Ablaufrinne" insbesondere ein nach außen einem Benutzer zugänglicher und sichtbarer Kanal verstanden werden, entlang welchem etwaige Flüssigkeit gezielt von der Kabeltrommel abgeführt werden kann. Durch das nach außen offene Ausgestalten der Ablaufrinnen ist sichergestellt, dass ein Benutzer eine etwaige Verstopfung oder Verschmutzung der Ablaufrinnen optisch bzw. visuell erkennen kann und aufgrund der nach außen offenen Ausgestaltung bedarfsweise Abhilfe schaffen kann (zum Beispiel durch Reinigen), um die Ablaufrinnen wieder freizumachen. Die Rinnenform der Ablaufrinnen bewirkt ein definiertes Abführen der Flüssigkeit entlang eines vorbestimmten fluidischen Pfads hin zu einer Zielposition, wo die Flüssigkeit die elektrische Funktionalität der Kabeltrommel nicht mehr unerwünscht beeinflussen kann. Mit Vorteil können die offenen Ablaufrinnen vollständig in einer Stirnfläche des Drehkörpers ausgebildet sein, d.h. sich gerade nicht als vollumfänglich umschlossene Kapillare tief und unzugänglich in das Innere der Kabeltrommel hinein erstrecken.

Im Rahmen der vorliegenden Anmeldung kann unter einem "Drehkörper" insbesondere ein Körper verstanden werden, der mit der Trommel mechanisch verbunden werden kann bzw. ist, sodass ein Drehen des Drehkörpers zu einem Drehen der Trommel zum Auf- oder Abwickeln des Kabels an der Trommel führt. Ein solcher Drehkörper kann zum Beispiel als Drehteller oder Drehplatte ausgebildet sein und kann auf die Trommel, insbesondere flüssigkeitsdicht, in axialer Trommelrichtung aufgesetzt werden.

Gemäß einem exemplarischen Ausführungsbeispiel der Erfindung ist eine Kabeltrommel geschaffen, bei der möglicherweise auf einen Drehkörper einer Kabeltrommel einwirkende Flüssigkeit in definierter Weise entlang der mehreren nach außen hin offener Ablaufrinnen selbsttätig abgeführt werden kann, ohne dass die Flüssigkeit dabei unerwünscht in Wirkverbindung mit der mindestens einen Steckdose oder zugeordneten elektrischen Anschlüssen gerät. Dadurch ist eine betriebssichere Handhabung der Kabeltrommel durch einen Benutzer sichergestellt, da die Flüssigkeit keinen elektrischen Kurzschluss oder andere unerwünschte elektrische Effekte bewirken kann. Indem die Ablaufrinnen nach außen hin offen sind, ist es einem Benutzer einfach möglich, eine etwaige Verstopfung der Ablaufrinnen durch Schmutz oder dergleichen schnell zu erkennen und erforderlichenfalls das wieder ungehinderte Abfließen von Flüssigkeit durch Wiederfreimachen einer verstopften Ablaufrinne zu gewährleisten. Indem die Ablaufrinnen aufgrund ihrer Ausgestaltung automatisch zum Abfließen der Flüssigkeit führen, ist keine zusätzliche Benutzeraktivität erforderlich, um die Flüssigkeitsabfuhr zu bewirken. Auf diese Weise ist gemäß einem exemplarischen Ausführungsbeispiel der Erfindung eine Kabeltrommel mit einem einerseits sicheren Abfluss für Wasser oder andere Flüssigkeiten geschaffen, der andererseits auch konstruktiv einfach gestaltet ist. Statt Regenrinnen in Form von unzugänglichen Kanälen im Inneren der Trommel vorzusehen, wird oder werden ein oder mehrere offene Abläufe für Flüssigkeiten wie Regenwasser auf einer Drehfläche eines Drehkörpers in Wirkverbindung mit der Trommel vorgesehen. Ein bevorzugtes Ausführungsbeispiel der Erfindung schafft also mehrere auf einer Vorderseite offen gestaltete Ablaufrinnen zum Ablauf von eventuell einwirkendem Wasser. Durch die offene Gestaltung der Ablaufrinnen können eventuelle Verstopfungen der Regenrinne(n) schnell erkannt und beseitigt werden.

Im Weiteren werden zusätzliche Ausführungsbeispiele der Kabeltrommel beschrieben.

Die offenen Ablaufrinnen sind an dem Drehkörper radial nach außen hin in einer axialen Richtung der Trommel abfallend angeordnet. Mit anderen Worten können die Ablaufrinnen gegenüber einer senkrecht zu einer Achse der Trommel orientierten Drehebene schräg orientiert sein (zum Beispiel unter einem Winkel in einem Bereich zwischen 1° und 20°, insbesondere zwischen 3° und 10°). Dadurch ist sichergestellt, dass einfallende Flüssigkeit (zum Beispiel herabfallender Regen) entlang der Schräge der jeweiligen Ablaufrinne herabfließt und daher von einem Zentrum des Drehkörpers hin zu einer Peripherie des Drehkörpers abgeführt wird. Mit anderen Worten kann die Abfallschräge der Ablaufrinnen sich von einem Zentrum des Drehkörpers aus radial nach außen hin nach unten erstrecken, sodass die Flüssigkeit anschaulich nach außen hin abfließen kann.

Gemäß einem Ausführungsbeispiel kann oder können jedem der mindestens einen Steckdose mindestens eine, zwei oder mehr offene Ablaufrinnen zugeordnet sein. Zwei einer jeweiligen Steckdose zugeordnete Ablaufrinnen können bevorzugt beidseitig der Steckdose angeordnet sein, um einen möglichst wirksamen Abtransport von Flüssigkeit an beiden gegenüberliegenden Seiten der Steckdose zu bewerkstelligen. Beim Ausfall einer Ablaufrinne (zum Beispiel durch Verstopfung) kann Flüssigkeit noch durch die redundante andere Ablaufrinne abfließen.

Gemäß einem Ausführungsbeispiel kann die mindestens eine Steckdose in axialer Richtung der Trommel gegenüber den Ablaufrinnen überstehend ausgebildet sein. Anders ausgedrückt können die Ablaufrinnen in axialer Richtung der Trommel gegenüber der jeweiligen Steckdose zurückversetzt sein, sodass durch die Ablaufrinnen abfließende Flüssigkeit vor einem Kontakt mit der jeweiligen, erhaben angeordneten Steckdose geschützt wird. Dies verbessert weiter die Betriebssicherheit der Kabeltrommel.

Insbesondere können die Schutzabschnitte als axiale Überstände zwischen benachbarten Ablaufrinnen vorgesehen sein. Solche erhabenen Schutzabschnitte begrenzen zum einen die jeweilige Ablaufrinne und tragen daher zur gezielten Definition einer Abfließrichtung von Flüssigkeit bei. Andererseits sorgen die Schutzabschnitte dafür, dass bei einem Umfallen oder einem Anstoßen der Kabeltrommel die Ablaufrinnen vor einer Verschmutzung zuverlässig geschützt ist.

Stehen die mehreren Schutzabschnitte des Drehkörpers nicht nur gegenüber den zurückversetzten Ablaufrinnen, sondern auch gegenüber der vorzugsweise gegenüber den Ablaufrinnen in axialer Richtung nach vorne versetzten Steckdose hervor, ist die Steckdose bei einem Umfallen oder einem Anstoßen der Kabeltrommel vor einer unerwünschten Beschädigung oder einem gefährlichen Lösen elektrischer Verbindungen geschützt.

Gemäß einem Ausführungsbeispiel kann der Drehkörper als Drehteller ausgebildet sein. Bei einer solchen Ausgestaltung kann der Drehkörper also als Drehscheibe bzw. Drehplatte ausgebildet sein, welche auf die Trommel aufgesetzt und daran befestigt werden kann. Auf diese Weise kann ein Inneres der Trommel durch den Drehteller sicher gegenüber mechanischen, chemischen und elektrischen Einflüssen aus der Umgebung geschützt werden. Außerdem kann der Drehteller eine Drehbetätigung der vorzugsweise starr mit dem Drehteller gekoppelten Trommel ermöglichen.

Gemäß einem Ausführungsbeispiel kann der Drehkörper an der Trommel befestigt sein. Eine solche Befestigung kann insbesondere starr sein und zum Beispiel mittels einer Verschraubung, einer Vernietung, einem Verkleben und/oder dem Ausbilden einer mechanischen Rastverbindung bewerkstelligt werden.

Gemäß einem Ausführungsbeispiel kann die Kabeltrommel eine flüssigkeitsdichte Dichtung zwischen dem Drehkörper und der Trommel aufweisen, die zum Unterbinden eines Eindringens von Flüssigkeit in einen elektrischen Bauraum der Trommel ausgebildet sein kann. Eine solche flüssigkeitsdichte Dichtung, die zum Beispiel als O-Ring ausgebildet sein kann, kann ein unerwünschtes Eindringen von Flüssigkeit in den elektrischen Bauraum zwischen Trommel und Drehkörper hemmen oder sogar verunmöglichen. Dringt elektrisch leitfähige Flüssigkeit (zum Beispiel Regenwasser) in diesen elektrischen Bauraum ein, so kann es dort zu Kurzschlüssen oder der Zerstörung elektrischer Funktionalität kommen. Auch kann der Kontakt zwischen leitfähiger Flüssigkeit und elektrischen Komponenten der Kabeltrommel zu einer Gefährdung eines Benutzers führen. Daher ist das Vorsehen einer flüssigkeitsdichten Dichtung zwischen Drehkörper und Trommel eine wirksame Maßnahme zur Verbesserung der Betriebssicherheit der Kabeltrommel.

Gemäß einem Ausführungsbeispiel kann der elektrische Bauraum zumindest eines aus der Gruppe - jeweils ganz oder teilweise - aufnehmen, die besteht aus einem Thermoschutzschalter, einer Betriebsanzeige, einer elektrischen Kopplungseinrichtung zum elektrischen Koppeln des Kabels mit der mindestens einen Steckdose, einem USB-Anschluss, einer Ladeeinrichtung für ein Mobiltelefon und einer Leuchte. Ein solcher Thermoschutzschalter kann elektrische Leitungen in dem elektrischen Bauraum und auch die auf die Trommel aufgewickelten Leitungen vor Überhitzung schützen, indem er bei Überschreitung einer vorgebbaren Grenztemperatur einen elektrischen Schaltkreis der Kabeltrommel unterbricht. Eine Betriebsanzeige kann zum Beispiel an dem Drehkörper von außen sichtbar angebracht werden und zum Beispiel nur bei aktivem elektrischen Betrieb der Kabeltrommel leuchten. Eine elektrische Kopplungseinrichtung zum elektrischen Koppeln eines Endes des Kabels mit der einen oder mehreren Steckdosen ist für die elektronische Funktionalität der Kabeltrommel vorteilhaft. Ein USB-Anschluss im elektrischen Bauraum zwischen Trommel und Drehkörper und/oder in einem Bauraum zwischen Trommel und einem in axialer Richtung der Trommel rückseitigen Verschlussdeckel an einem unten näher beschriebenen Trommelhalteabschnitt eines Basiskörpers der Kabeltrommel kann zum Beispiel ein Aufladen eines portablen elektronischen Benutzergeräts ermöglichen. Auch kann ein Ladekabel für ein solches portables elektronisches Benutzergerät (zum Beispiel ein Mobilfunkgerät) in dem Bauraum zwischen Drehkörper und Trommel und/oder zwischen Trommel und Verschlussdeckel vorgesehen sein. Ferner kann auch eine Arbeitsleuchte vorgesehen sein, die zum Beispiel an dem Drehkörper angebracht sein kann und Licht nach außen hin zu einem Benutzer abstrahlen kann. Eine, mehrere oder alle diese elektrischen Anwendungen können durch elektrische Energie angetrieben werden, die von einem Stromnetz oder einem Akku bereitgestellt wird, das bzw. der über den Stecker der Kabeltrommel mit der jeweiligen elektrischen Anwendung verbunden ist.

Gemäß einem Ausführungsbeispiel kann die mindestens eine Steckdose einen abnehmbaren oder abklappbaren Deckel aufweisen, der insbesondere flüssigkeitsdicht, auf die Steckdose aufsetzbar ist. Ein solcher Deckel kann als Abdeckkappe aus einem elektrisch isolierenden Material vorgesehen sein, die auf die jeweilige Steckdose aufgesetzt werden kann. Um den Deckel verliersicher an der Kabeltrommel zu befestigen, kann der Deckel zum Beispiel mittels eines Scharniers (zum Beispiel ein Filmscharnier, das zum Beispiel aus Kunststoff hergestellt sein kann) klappbar an der Steckdose befestigt sein. Wenn zwischen dem Deckel und der Steckdose eine flüssigkeitsdichte Dichtung vorgesehen ist, ist ein unerwünschtes Eindringen von Flüssigkeit in das Innere der Steckdose zuverlässig vermieden und daher die Betriebssicherheit der Kabeltrommel weiter verbessert.

Gemäß einem Ausführungsbeispiel können die Ablaufrinnen dimensioniert sein, durch einen Benutzer, insbesondere von Hand, bedarfsweise gereinigt zu werden. Ein einfaches Reinigen der Ablaufrinnen von Hand ermöglicht die Aufrechterhaltung der Flüssigkeitsabfuhrfunktion, selbst wenn die Ablaufrinnen vorübergehend durch Schmutz oder dergleichen verstopft sein sollte. Zum Reinigen von Hand können die Ablaufrinnen vorzugsweise eine Dimension haben, die es einem Benutzer erlaubt, die jeweilige Ablaufrinne mit einem bloßen Finger zu reinigen. Zum Beispiel können die Ablaufrinnen zu diesem Zweck an ihrer engsten Stelle eine Breite von mindestens 0,5 cm, vorzugsweise von mindestens 1 cm, aufweisen. Ferner sollen die Ablaufrinnen zur Reinigbarkeit von Hand so nach außen offen sein, dass ein Benutzer die Ablaufrinnen durch eine Reinigungsbewegung im Wesentlichen in radialer Richtung des Drehkörpers senkrecht oder annähernd senkrecht zu einer axialen Richtung der Trommel von Fremdkörpern befreien kann.

Gemäß einem Ausführungsbeispiel kann der Drehkörper mit den offenen Ablaufrinnen ausgebildet sein, dass dem Drehkörper zugeführte Flüssigkeit entlang den offenen Ablaufrinnen abgeführt wird, ohne sich im Bereich der mindestens einen Steckdose zu stauen. Durch eine schräge Anordnung der mindestens einen Ablauffläche, abfallend von einem Zentrum hin zu einem Rand des Drehkörpers, kann sichergestellt werden, dass die Flüssigkeit ohne Benutzeraktivität entlang den Ablaufrinnen von dem Drehkörper abgeführt wird, ohne sich im Bereich der einen oder mehreren Steckdosen anzusammeln.

Gemäß einem Ausführungsbeispiel können die offenen Ablaufrinnen jeweils als mindestens eine durchgehend offene Nut in dem Drehkörper ausgebildet sein. Insbesondere können die offenen Ablaufrinnen jeweils als mindestens eine durchgehend offene Nut in einer nach außen hin offenen Stirnfläche des Drehkörpers ausgebildet sein. Eine solche Nut kann eine rinnenförmige Vertiefung des Drehkörpers sein, der im Wesentlichen plattenförmig mit Erhebungen und Vertiefungen ausgebildet sein kann. Eine derartige Nut erstreckt sich entlang ihrer gesamten Erstreckung an einer extern zugänglichen Oberfläche des Drehkörpers, und vorzugsweise radial.

Gemäß einem Ausführungsbeispiel kann der Drehkörper kreisscheibenförmig mit mehreren, insbesondere vier, umfänglich angeordneten Steckdosen mit jeweils mindestens zwei sich in Radialrichtung erstreckenden und radial abschüssigen Ablaufrinnen ausgebildet sein. Gemäß einer solchen bevorzugten Ausführungsform können insgesamt acht radial nach außen hin jeweils abfallende Ablaufrinnen vorgesehen sein, von denen sich jeweils ein Paar linksseitig und rechtsseitig einer jeweiligen der radial umlaufend angeordneten vier Steckdosen erstreckt.

Gemäß einem Ausführungsbeispiel kann die Kabeltrommel einen Basiskörper mit einem Trommelhalteabschnitt aufweisen, an dem die Trommel drehbar gelagert ist. Der Basiskörper kann zum Beispiel als einstückiger, gegebenenfalls sogar einstoffiger (zum Beispiel aus Kunststoff ausgebildeter), integraler Körper vorgesehen sein. Dieser kann zum Beispiel als Spritzgussteil ausgebildet sein. Alternativ kann der Basiskörper auch aus mehreren separaten, miteinander verbindbaren Einzelkörpern aufgebaut sein. An dem Trommelhalteabschnitt des Basiskörpers kann die Trommel drehfähig gelagert sein.

Gemäß einem Ausführungsbeispiel kann die Kabeltrommel mindestens ein Lager (insbesondere mindestens ein Kugellager und/oder mindestens ein Kegelrollenlager) aufweisen, das zum drehfähigen Lagern der Trommel an dem Trommelhalteschnitt ausgebildet ist. Vorzugsweise sind zwei solche Lager vorgesehen. Zum Beispiel kann ein solches Lager zwischen dem Trommelhalteschnitt und der Trommel angebracht und zum drehfähigen Lagern der Trommel ausgebildet sein. Allerdings sind andere Positionierungen des Lagers möglich. Der Trommelhalteabschnitt des Basiskörpers kann zum Beispiel einen Lagerzapfen aufweisen, an dem das mindestens eine Lager drehfähig angebracht sein kann. Dies erlaubt einen leichtläufigen Betrieb der Kabeltrommel. Vorzugsweise ist das mindestens eine Lager gekapselt, um einen Schutz vor Wasser und Staub bereitzustellen.

Gemäß einem Ausführungsbeispiel kann die Kabeltrommel eine Reibungserzeugungseinrichtung, insbesondere ein Filzkörper oder eine Scheibe mit strukturierter Oberfläche, zum Beaufschlagen des Lagers mit einer insbesondere einstellbaren Reibungskraft aufweisen. Mittels einer solchen Reibungserzeugungseinrichtung kann der Grad der Leichtläufigkeit der Trommel eingestellt werden. Dadurch kann verhindert werden, dass sich die Trommel selbst durch geringe Erschütterungen oder Umgebungseinflüsse dreht, ohne dass ein Benutzer dies wünscht. Darüber hinaus kann die Reibungserzeugungseinrichtung, zum Beispiel ausgestaltet als Filzkörper, auch zur Flüssigkeitsdichtigkeit der Kabeltrommel insgesamt beitragen.

Gemäß einem Ausführungsbeispiel kann der Trommelhalteabschnitt mindestens eine Montagestruktur zum Montieren der Kabeltrommel an einem Montagekörper, insbesondere an einer Wand oder an einem Gerüst, aufweisen. Zum Beispiel kann mittels einer solchen Montagestruktur die Kabeltrommel (zum Beispiel mittels eines Kabelbinders, eines Hakens, einer Schlaufe oder eines Schraubenelements) an einer vertikalen Montagestruktur aufgehängt oder anderweitig montiert werden. Dadurch kann vermieden werden, dass die Kabeltrommel im Betrieb auf dem Boden aufsetzt, wo sich unerwünschte Flüssigkeit sammeln und in Wirkverbindung mit den elektrischen Bauteilen der Kabeltrommel gelangen kann.

Gemäß einem Ausführungsbeispiel kann der Basiskörper mindestens einen Fuß, insbesondere zwei Füße, aufweisen, wobei der mindestens eine Fuß zum Aufsetzen der Kabeltrommel auf einen Untergrund ausgebildet ist. Durch den mindestens einen Fuß kann ein stabiles Aufsetzen der Kabeltrommel auf den Untergrund ermöglicht werden, wenn die Kabeltrommel in einem solchen Betriebsmodus auf den Untergrund aufgesetzt werden soll. Der Fuß kann aus elektrisch isolierendem Material gebildet sein, zum Beispiel Kunststoff. Dadurch ist eine unerwünschte Wirkverbindung zwischen elektrisch leitfähiger Flüssigkeit am Boden und den elektrischen Bauteilen der Kabeltrommel vermieden. Bei Vorsehen von mehreren Füßen ist die Stabilität der Kabeltrommel und der Schutz derselben vor einem Umfallen noch zuverlässiger. Mit Vorteil kann der mindestens eine Fuß an der Oberseite und/oder an der Unterseite mit einer Oberflächenstruktur versehen sein, welche ein Halten des Fußes an einem Untergrund durch einen Tritt mit einem Fuß eines Benutzers auf den Fuß der Kabeltrommel ermöglicht.

Gemäß einem Ausführungsbeispiel kann der mindestens eine Fuß in axialer Richtung der Trommel über den Drehkörper, und insbesondere auch über die mindestens eine Steckdose, überstehen. Dadurch ist sichergestellt, dass selbst bei einem Umfallen der Kabeltrommel der Drehkörper und bevorzugt auch die mindestens eine Steckdose vor einer mechanischen Beschädigung und vor einem möglichen Kontakt mit Flüssigkeit am Boden geschützt sind. Stattdessen kann ein solcher mechanischer Stoß dann von dem elektrisch isolierenden Fuß aufgenommen werden, der auch ohne Verminderung der Betriebssicherheit mit einer elektrisch leitfähigen Flüssigkeit in Kontakt geraten kann.

Gemäß einem Ausführungsbeispiel kann der Basiskörper einen Griffabschnitt aufweisen, der zum Greifen der Kabeltrommel durch einen Benutzer ausgebildet ist. Auf diese Weise kann ein Benutzer die Kabeltrommel bequem von Hand mit sich führen.

Gemäß einem Ausführungsbeispiel kann der Griffabschnitt in axialer Richtung der Trommel über den Drehkörper, und insbesondere auch über die mindestens eine Steckdose, überstehen. Dadurch ist sichergestellt, dass selbst bei einem Umfallen der Kabeltrommel der Drehkörper und bevorzugt auch die mindestens eine Steckdose vor einer mechanischen Beschädigung und vor einem möglichen Kontakt mit Flüssigkeit am Boden geschützt ist. Stattdessen kann ein solcher mechanischer Stoß dann von dem vorzugsweise aus elektrisch isolierendem Material gebildeten Griffabschnitt aufgenommen werden, der auch ohne Verminderung der Betriebssicherheit mit einer elektrisch leitfähigen Flüssigkeit in Kontakt geraten kann. Besonders bevorzugt fällt die Kabeltrommel bei einem Umfallen auf den mindestens einen Fuß und auf den mindestens einen Griffabschnitt, die beide beidseitig in axialer Richtung über den Drehkörper und die mindestens eine Steckdose überstehen können.

Gemäß einem Ausführungsbeispiel kann der Griffabschnitt einen Kabelhalteabschnitt zum lösbaren Halten eines (zum Beispiel End-)Abschnitts des Kabels aufweisen. Zum Beispiel kann der Kabelhalteabschnitt als insbesondere oberseitige Nut in dem Griffabschnitt ausgebildet sein, die derart bemessen ist, dass das Kabel in seinem Endabschnitt reibschlüssig in die Nut aufgenommen werden kann. Mit Vorteil kann ein lösbares Halten des Endabschnitts des Kabels in dem Kabelhalteabschnitt dadurch weiter gefördert werden, dass die Nut mit einem Haltekraft verstärkenden Material (zum Beispiel Weichkunststoff) versehen wird. Die Nut kann (alternativ oder ergänzend zu einer Dichtlippe oder dergleichen) auch eine Mäanderstruktur aufweisen.

Gemäß einem Ausführungsbeispiel kann der Griffabschnitt austauschbar an dem Basiskörper angebracht sein. Da der Griffabschnitt im Betrieb einem besonders hohen Verschleiß ausgesetzt sein kann, kann ein selektives Ersetzen des Griffabschnitts unter Weiterverwendung des Rests des Basiskörpers ermöglicht werden. Dann braucht nicht der gesamte Basiskörper ausgetauscht werden, vielmehr kann dann ein bloßes Ersetzen lediglich des Griffabschnitts ausreichend sein. Dies führt zu einer Einsparung von Ressourcen.

Gemäß einem Ausführungsbeispiel kann zumindest eine Komponente aus der Gruppe bestehend aus der Trommel, dem Drehkörper und den Ablaufrinnen zumindest teilweise als Spritzgussteil ausgebildet sein. Die Herstellung von einem oder mehreren der genannten Komponenten der Kabeltrommel mittels Spritzgießens erlaubt eine kostengünstige und einfache Fertigung. Ferner ist es dadurch möglich, eine oder mehrere der genannten Komponenten der Kabeltrommel aus elektrisch isolierendem Kunststoff auszubilden, was die Betriebssicherheit der Kabeltrommel weiter verbessert.

Im Folgenden werden exemplarische Ausführungsbeispiele der vorliegenden Erfindung mit Verweis auf die folgenden Figuren detailliert beschrieben.
Figur 1 zeigt eine rückseitige Ansicht einer Kabeltrommel gemäß einem exemplarischen Ausführungsbeispiel der Erfindung.
Figur 2 zeigt eine Seitenansicht der Kabeltrommel gemäß Figur 1.
Figur 3 zeigt eine vorderseitige Ansicht der Kabeltrommel gemäß Figur 1.
Figur 4 zeigt eine Draufsicht der Kabeltrommel gemäß Figur 1.
Figur 5 zeigt eine Querschnittsansicht der Kabeltrommel gemäß Figur 1.
Figur 6 zeigt ein Kegellager einer Kabeltrommel gemäß einem exemplarischen Ausführungsbeispiel der Erfindung.
Figur 7 zeigt ein Kugellager einer Kabeltrommel gemäß einem exemplarischen Ausführungsbeispiel der Erfindung.
Figur 8 zeigt eine räumliche Innenansicht einer Kabeltrommel entsprechend Figur 1
Figur 9 zeigt eine räumliche Ansicht einer Kabeltrommel gemäß einem anderen Ausführungsbeispiel der Erfindung.
Figur 10 zeigt eine andere räumliche Ansicht der Kabeltrommel gemäß Figur 9.
Figur 11 zeigt eine rückseitige Ansicht einer Kabeltrommel gemäß einem exemplarischen Ausführungsbeispiel der Erfindung, die an der Rückseite freigelegte Schraubdome aufweist.

Gleiche oder ähnliche Komponenten in unterschiedlichen Figuren sind mit gleichen Bezugsziffern versehen.

Bevor bezugnehmend auf die Figuren exemplarische Ausführungsbeispiele beschrieben werden, sollen einige grundlegende Überlegungen zusammengefasst werden, basierend auf denen exemplarische Ausführungsbeispiele der Erfindung abgeleitet worden sind.

Steckdosen in einer herkömmlichen Kabeltrommel können über eine Drehfläche einer Trommel hinausstehend ausgebildet werden, damit kein Spritz- und Strahlwasser (beispielsweise Regenwasser) in diese und einen elektrischen Anschlussraum oder Bauraum der Kabeltrommel eindringen kann. Hierbei wird herkömmlich aus Konstruktionsgründen häufig eine dünne Drehfläche vorgesehen, in der die Steckdosen angeordnet ist. Um diese dünne Fläche zu stabilisieren, wird herkömmlich ein gegenüber dieser Fläche breiter Ring am Rand derselben vorgesehen, der jedoch aber gegenüber der Fläche erhöht ist. Dadurch sammelt sich Wasser auf der Drehfläche, wenn die Trommel auf dem Rücken liegt, was ein Risiko für den Anwender ist.

In einer alternativen herkömmlichen Ausführungsform ist eine Steckdose gegenüber einer Drehfläche an einer Trommel zurückgezogen, d.h. in diese hinein versetzt. In diesen Fällen sind Ablaufkapillaren für Regenwasser vorgesehen, d.h. es sind enge Kanäle gebildet, durch die das auftreffende Wasser nach außen, beispielsweise durch die Trommel, abgeführt wird. Bei einem solchen Ausführungsbeispiel besteht das Risiko, dass die Kanäle zum Ablauf des Wassers durch Baustellenstaub, etc. mit der Zeit zuwachsen können, d.h. geschlossen werden, wodurch das Wasser nicht mehr durch diese abfließen kann. Wiederum besteht dann ein Risiko für den Anwender.

Exemplarische Ausführungsbeispiele der Erfindung sehen bei einer Kabeltrommel nach außen offene Ablaufrinnen vor, durch die mit konstruktiv einfachen Mitteln eine hohe elektrische Betriebssicherheit der Kabeltrommel erreicht werden kann. Bei einem unerwünschten Verschließen einer solchen nach außen offenen Ablaufrinne in einem Drehkörper der Kabeltrommel kann ein Benutzer dieses Verschließen schnell visuell erkennen und kann mit einfachen Mitteln die nach außen offene Ablaufrinne von der Verschmutzung befreien.

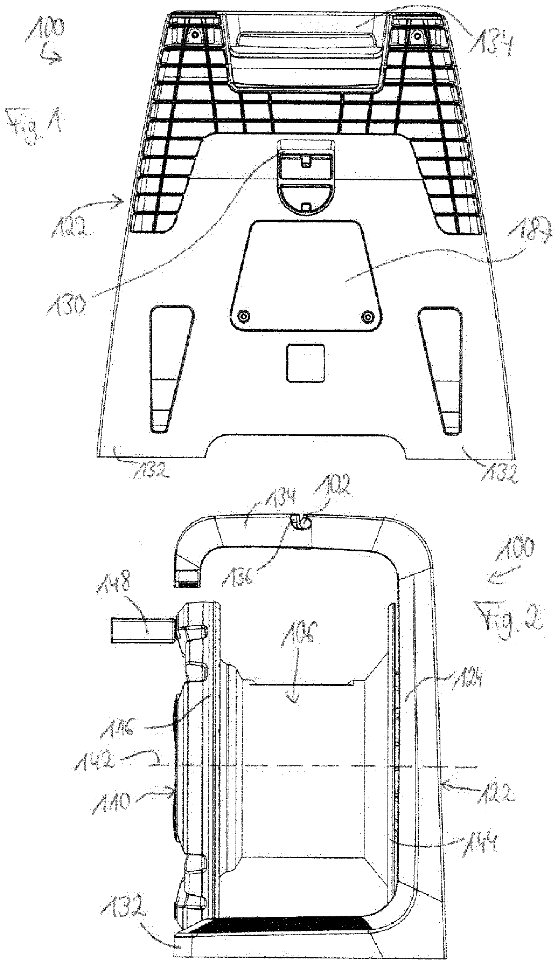

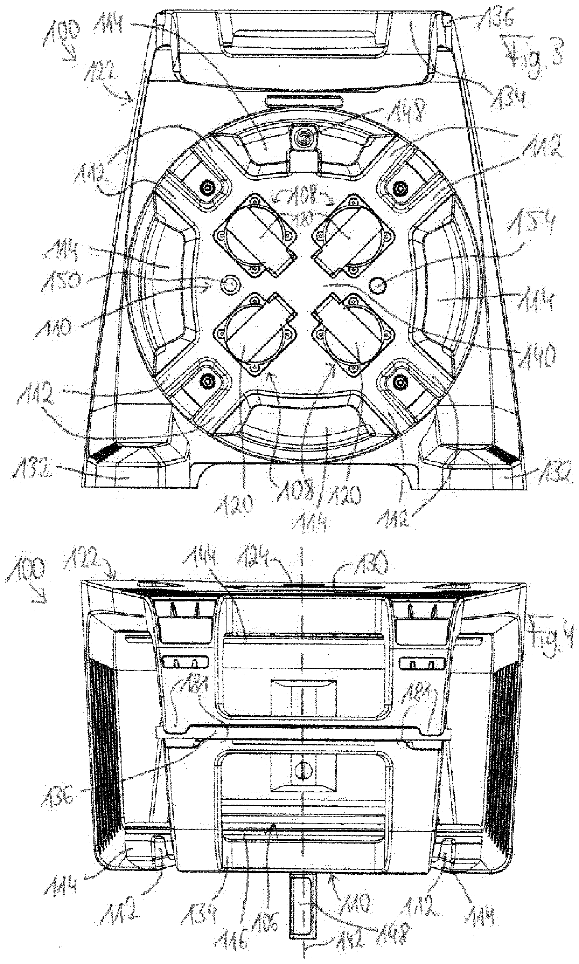

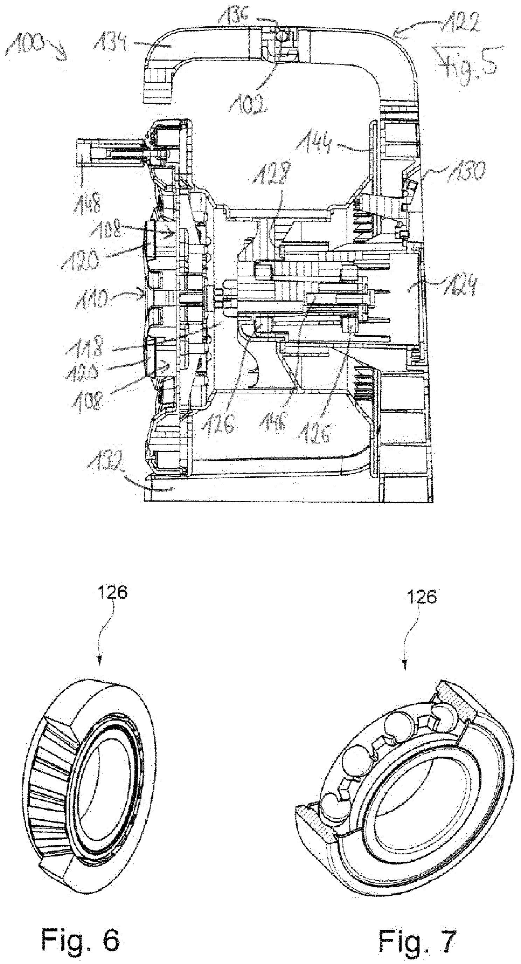

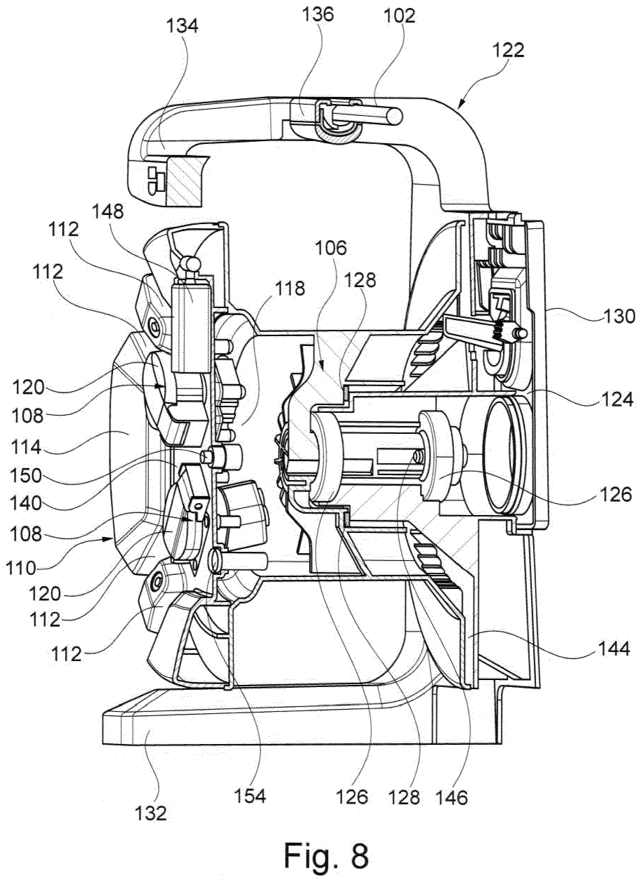

**Figur 1** zeigt eine rückseitige Ansicht einer Kabeltrommel 100 gemäß einem exemplarischen Ausführungsbeispiel der Erfindung. **Figur 2** zeigt eine Seitenansicht der Kabeltrommel 100 gemäß Figur 1. **Figur 3** zeigt eine vorderseitige Ansicht der Kabeltrommel 100 gemäß Figur 1. **Figur 4** zeigt eine Draufsicht bzw. Oberansicht der Kabeltrommel 100 gemäß Figur 1. **Figur 5** zeigt eine Querschnittsansicht der Kabeltrommel 100 gemäß Figur 1. **Figur 6** zeigt ein Kegelrollenlager als Beispiel für ein Lager 126, das in der Kabeltrommel 100 gemäß Figur 1 verbaut werden kann, wenn eine besonders leichtgängige Realisierung gewünscht wird. **Figur 7** zeigt ein Rillenkugellager als anderes Beispiel für ein Lager 126, das in der Kabeltrommel 100 gemäß Figur 1 verbaut werden kann, wenn eine besonders kompakte und flache Bauform realisiert werden soll. **Figur 8** zeigt eine räumliche Innenansicht einer Kabeltrommel 100 entsprechend Figur 1.

Die in den oben genannten Figuren abgebildete Kabeltrommel 100 gemäß einem exemplarischen Ausführungsbeispiel der Erfindung weist ein isoliertes elektrisches Kabel 102 (das nur abschnittsweise bzw. schematisch dargestellt ist) mit einem Stecker (nicht dargestellt) an einem Kabelende auf. Dies ist zum Beispiel in Figur 2 zu erkennen. Das Kabel 102 kann eine Länge von einigen Metern, zum Beispiel von 10 m, haben. Der Stecker kann zum Einstecken in eine genormte Steckdose (nicht gezeigt) ausgebildet sein. Die Kabeltrommel 100 weist darüber hinaus eine in Figur 5 und Figur 8 zu erkennende Trommel 106 zum Aufrollen des Kabels 102 auf, um das aufgewickelte Kabel 102 zu verstauen. Das Kabel 102 kann von einem Benutzer aber auch bis zu einer bestimmten gewünschten Länge von der Trommel 106 abgewickelt werden, um zum Beispiel in einem Abstand von einer Steckdose Zugriff auf elektrischen Strom zu erhalten. Die Kabeltrommel 100 weist darüber hinaus vier Steckdosen 108 auf, die mit dem Kabel 102 elektrisch gekoppelt sind und in Figur 3 und in Figur 8 gut zu erkennen sind. Die Steckdosen 108 können in einen als Frontplatte ausgebildeten Drehkörper 110 eingelassen sein, sodass Anschraubflansche oberflächenbündig sitzen. Wenn der Stecker in eine nicht dargestellte externe Steckdose eingesteckt ist, kann durch Einstecken eines ebenfalls nicht dargestellten Steckers eines elektrischen Verbrauchers in eine der Steckdosen 108 der Kabeltrommel 100 der elektrische Verbraucher mit Strom aus der externen Steckdose versorgt werden.

Wie in Figur 3 und in Figur 8 zu erkennen ist, enthält die Kabeltrommel 100 darüber hinaus den als Drehteller ausgebildeten Drehkörper 110, an dessen Stirnseite die vier Steckdosen 108 angebracht sind. Der Drehkörper 110, der an der Trommel 106 montiert ist, kann von einem Benutzer im Uhrzeigersinn oder entgegen dem Uhrzeigersinn drehbetätigt werden, wodurch das Kabel 102 selektiv auf die Trommel 106 aufgerollt werden kann oder von der Trommel 106 abgerollt werden kann. Wie am besten in Figur 3 zu erkennen ist, sind in einer Stirnfläche des Drehkörpers 110 acht nach außen hin offene and radial verlaufend angeordnete Ablaufrinnen 112 zum Abführen von Flüssigkeit, zum Beispiel Regenwasser, weg von dem Drehkörper 110 gebildet. Jede der sich radial in der Stirnfläche des im Wesentlichen kreisscheibenförmigen Drehkörpers 110 erstreckenden offenen Ablaufrinnen 112 fällt entlang einer radialen Richtung des Drehkörpers 110 nach außen hin ab. Hierzu sind die Ablaufrinnen 112 gegenüber einer Papierebene von Figur 3 nach außen abfallend geneigt. Im Bereich der Steckdosen 108 weist der Drehkörper 110 eine zentrale (zum Beispiel in etwa kreisförmige) flächige Vertiefung 140 auf. Die flächige Vertiefung 140 bildet für die Flüssigkeitsabfuhr den höchsten Punkt. Jede der offenen Ablaufrinnen 112 erstreckt sich als fortgesetzt vertiefter Bereich ausgehend von der flächigen Vertiefung 140 bis hin zu einem radial äußeren Rand des Drehkörpers 110. Einfallendes Regenwasser oder sonstige Flüssigkeit fließt daher ausgehend von der flächigen Vertiefung 140 durch eine jeweilige der offenen Ablaufrinnen 112 infolge von deren Abschrägung unter dem Einfluss der Gravitationskraft nach außen hin ab und wird daher von der Kabeltrommel 100 abgeführt. In dem dargestellten Ausführungsbeispiel sind jeder der Steckdosen 108 jeweils zwei offene Ablaufrinnen 112 zugeordnet, die linksseitig und rechtsseitig einer zugeordneten Steckdose 108 angeordnet sind und in einem jeweiligen Steckdosenbereich in die flächige Vertiefung 140 münden.

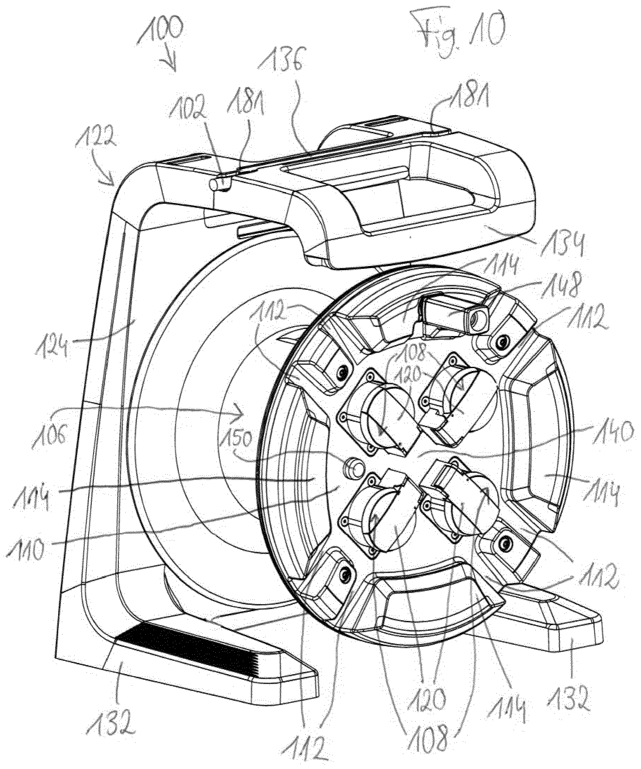

Wie in Figur 8 (und in entsprechender Weise in Figur 10) dargestellt, ragen die Steckdosen 108 in axialer Richtung 142 der Trommel 106 über die Ablaufrinnen 112 hinaus. Die axiale Richtung 142 der Trommel 106 ist in Figur 2 horizontal und in Figur 4 vertikal dargestellt und ist senkrecht zur Papierebene von Figur 3 orientiert. Zwischen benachbarten Ablaufrinnen 112 sind axial überstehende Schutzabschnitte 114 des Drehkörpers 110 gebildet, die auch gegenüber den Steckdosen 108 in der axialen Richtung 142 der Trommel 106 überstehend ausgebildet sind.

Wie zum Beispiel in Figur 2 und Figur 4 zu erkennen, ist eine zum Beispiel als Gummi- oder Kunststoffring ausgebildete flüssigkeitsdichte Dichtung 116 zwischen dem Drehkörper 110 und der Trommel 106 angebracht. Die Dichtung 116 ist zum Unterbinden eines Eindringens von Flüssigkeit in einen elektrischen Bauraum 118 der Trommel 106 ausgebildet. In dem elektrischen Bauraum 118 können sich Komponenten eines Thermoschutzschalters 150, einer Betriebsanzeige 154, einer elektrischen Kopplungseinrichtung zum elektrischen Koppeln des Kabels 102 mit den Steckdosen 108, eines USB-Anschlusses, einer Ladeeinrichtung für ein Mobiltelefon und/oder einer Leuchte mindestens abschnittsweise befinden.

Jede der Steckdosen 108 ist mit einem abklappbaren Deckel 120 versehen, der in einem inaktiven Betriebszustand einer jeweiligen Steckdose 108 von einem Benutzer im Wesentlichen flüssigkeitsdicht auf die Steckdose 108 aufgesetzt werden kann. Um eine jeweilige Steckdose 108 in Betrieb zu nehmen, kann der Benutzer den Deckel 120 von der Steckdose 108 abklappen, ohne dass der Deckel 120 dabei von der Kabeltrommel 100 abgetrennt wird. Eine solche unverlierbare Konfiguration eines jeweiligen Deckels 120 kann durch ein Scharnier zwischen dem Deckel 120 und dem Rest der Steckdose 108 bewerkstelligt werden.

Jede der Ablaufrinnen 112 kann dimensioniert sein, durch einen Benutzer von Hand gereinigt zu werden. Indem eine Ablaufrinne 112 zum Beispiel eine minimale Breite von mindestens 0,1 cm, bevorzugt mindestens 1 cm, aufweist, kann ein Benutzer zum Beispiel mit einem Finger Schmutz aus einer jeweiligen Ablaufrinne 112 entfernen. Dadurch kann ein ungehinderter Abfluss von Flüssigkeit durch eine jeweilige Ablaufrinne 112 wiederhergestellt werden, wenn sich zum Beispiel Schmutz in der Ablaufrinne 112 angesammelt hat. Durch die nutenförmige Realisierung der Ablaufrinnen 112 als optisch erkennbare Vertiefungen in einer Stirnfläche des Drehkörpers 110 kann ein Benutzer nicht nur schnell einen solchen Verschmutzungszustand erkennen, sondern diesen auch zügig beseitigen. Indem pro Steckdose 108 mehrere Ablaufrinnen 112 vorgesehen werden, kann selbst bei Verstopfen einer dieser Ablaufrinnen 112 Flüssigkeit durch eine andere der Ablaufrinnen 112 abfließen. Durch diese Redundanz der Abflussrinnen 112 ist die Betriebssicherheit der Kabeltrommel 100 daher weiter verbessert. Durch das beschriebene Ausbilden des Drehkörpers 110 mit den durchgehend zugänglich offenen Ablaufrinnen 112 kann sichergestellt werden, dass auf den Drehkörper 110 einwirkende Flüssigkeit (zum Beispiel Regenwasser) in jedem Betriebszustand entlang zumindest einer der offenen Ablaufrinnen 112 abgeführt wird, ohne sich im Bereich der Steckdosen 108 zu stauen.

Abgesehen von der drehbaren Trommel-Drehkörper-Rotoranordnung weist die Kabeltrommel 100 einen als Stator ausgebildeten Basiskörper 122 auf, der als Kunststoffkörper ausgebildet sein kann. Der Basiskörper 122 ist zum Beispiel in Figur 5 und Figur 8 zu erkennen. Der Basiskörper 122 ist mit einem zentralen Trommelhalteabschnitt 124 versehen, an dem die Trommel 106 drehbar gelagert ist. Mittels Lagern 126 (die zum Beispiel als Kugellager, vergleiche Figur 7, oder als Kegelrollenlager, vergleiche Figur 6, ausgebildet sein können) zwischen dem Trommelhalteschnitt 124 und der Trommel 106 ist ein drehfähiges Lagern der Trommel 106 bewerkstelligt. Eine in Figur 5 und Figur 8 zu erkennende Reibungserzeugungseinrichtung 128, die zum Beispiel ein zusätzlich dichtender Filzkörper sein kann, dient zum Beaufschlagen des Lagers 126 mit einer einstellbaren Reibungskraft. Durch das Zusammenspiel des Lagers 126 und der Reibungserzeugungseinrichtung 128 kann eine leichtläufige Kabeltrommel 100 geschaffen werden, die gleichzeitig vor einem unerwünschten Drehen in Anwesenheit minimaler Kräfte zuverlässig geschützt ist. Mit dieser Konfiguration kann ein zu den Lagern 126 dicht gehaltener Technikbauraum ausgebildet werden. Anders ausgedrückt kann die bevorzugt als Filzring ausgebildete Reibungserzeugungseinrichtung 128 als Zusatzdichtung fungieren. Figur 8 zeigt eine Filzringaufnahme und eine umlaufende Schutzrippe.

Wie zum Beispiel in Figur 1 erkennbar, kann an dem Trommelhalteabschnitt 124 eine Montagestruktur 130 zum Montieren der Kabeltrommel 100 an einem nicht dargestellten Montagekörper (zum Beispiel eine Wand oder ein Gerüst) ausgebildet sein. Zum Beispiel kann die Kabeltrommel 100 mit einem Haken oder einem Kabelbinder an einem solchen Montagekörper befestigt werden, wenn die Kabeltrommel 100 nicht auf einen Boden aufgesetzt werden soll.

Zum Aufsetzen auf einen Boden ist der Basiskörper 122 mit zwei Füßen 132 versehen (vergleiche Figur 3), die aus einem elektrisch isolierenden Kunststoffmaterial hergestellt sind und somit einen sicheren Stand und eine elektrische Entkopplung zwischen dem Boden und den elektrischen Komponenten der Kabeltrommel 100 bewirken. Somit können zwei separate Standfüße vorgesehen werden, wodurch in der flächigen Rückwand der Kabeltrommel 100 eine Aussparung zwischen den Füßen 132 gebildet ist.

Darüber hinaus weist, wie in Figur 3 oder Figur 8 zu erkennen, der Basiskörper 122 einen Griffabschnitt 134 auf, der zum händischen Greifen der Kabeltrommel 100 durch einen Benutzer ausgebildet ist. Der Griffabschnitt 134 ermöglicht daher einen einfachen Transport der Kabeltrommel 100. Mit Vorteil kann der Griffabschnitt 134 einen Kabelhalteabschnitt 136 zum lösbaren Halten eines (insbesondere End-)Abschnitts des Kabels 102 aufweisen. Ein Benutzer kann somit ein freies Ende des Kabels 102 angrenzend an den Stecker in den nutförmigen Kabelhalteabschnitt 136 einklemmen, um das Ende des Kabels 102 betriebssicher zu verstauen. Zur Verbesserung der lösbaren Klemmung kann der Kabelhalteabschnitt 136 zum Beispiel mit Weichkunststoff ausgespritzt werden. Wie in Figur 4 mit Bezugszeichen 181 angegeben, kann der Kabelhalteabschnitt 136 eine Mäanderstruktur zur Kabelführung aufweisen.

Die Trommel 106, der Drehkörper 110 mit den Ablaufrinnen 112 sowie der Basiskörper 122 können jeweils als Spritzgussteil ausgebildet werden. Dies ermöglicht eine kostengünstige Herstellung und eine elektrische Isolationswirkung der genannten Komponenten der Kabeltrommel 100 zur weiteren Erhöhung der Betriebssicherheit.

Die Kabeltrommel 100 gemäß dem beschriebenen Ausführungsbeispiel hat also die zwei Füße 132, die den Trommelhalteabschnitt 124 tragen, an dem die Trommel 106 mit dem Kabel 102 gelagert ist. An den Trommelhalteabschnitt 124 schließt sich der Griffabschnitt 134 zum Tragen der Kabeltrommel 100 an. Die Kabeltrommel 100 ist in dem dargestellten Ausführungsbeispiel mit vier Steckdosen 108 zum Einstecken von elektrischen Verbrauchern ausgestattet.

Die Füße 132, der Trommelhalteabschnitt 124 und der als Handgriff ausgebildete Griffabschnitt 134 können aus Kunststoff gebildet und integral miteinander ausgestaltet werden. Die Füße 132 stehen bevorzugt axial über die Trommel 106 hervor und weisen einen möglichst großen Abstand zueinander auf, um für einen stabilen Stand der Kabeltrommel 100 zu sorgen. Die Füße 132 weisen in axialer Blickrichtung (siehe Bezugszeichen 142) am oberen Ende zwei schräg verlaufende Flächen auf, die durch eine horizontal verlaufende Fläche verbunden sind. Die der Trommel 106 abgewandte Seite der Füße 132 ist als Schrägfläche gebildet, damit ein Benutzer auf diese treten kann, um die Kabeltrommel 100 am Boden zu fixieren. Die beiden übrigen Flächen (die horizontale Fläche und die der Trommel 106 zugewandte Schrägfläche) der Füße 132 sind vorgesehen, um einen möglichst breiten Fuß 132 zu gestalten.

Der Trommelhalteabschnitt 124 weist in seiner Mitte auf der Rückseite einen Verschlussdeckel 144 auf. Hinter diesem Verschlussdeckel 144 befindet sich die Lagerung der Trommel 106: Aus dem Trommelhalteabschnitt 124 steht ein Lagerzapfen 146 hervor, an dessen beiden Enden Lager 126 (zum Beispiel Kugellager) vorgesehen sind, um die Trommel 106 drehbar zu lagern. Der Verschlussdeckel 144 ist vorgesehen, um den Lagerzapfen 146 und die beiden Lager 126 staubfrei zu halten. Der Griffabschnitt 134 verläuft im Wesentlichen parallel zu einem Untergrund und weist in Axialrichtung in etwa mittig den senkrecht zur Axialrichtung verlaufenden Kabelhalteabschnitt 136 auf (der anschaulich als Kabelgarage bezeichnet werden kann). Für den Transport der Kabeltrommel 100 kann das freie Ende des Kabels 102 in den Kabelhalteabschnitt 136 eingelegt werden und ist dort lösbar gehalten, beispielsweise durch eine Mäanderform des Kabelhalteabschnitts 136 oder durch eine in den Kabelhalteabschnitt 136 eingespritzte Weichkomponente, die das freie Ende des Kabels 102 in dem Kabelhalteabschnitt 136 elastisch fixiert.

Der Griffabschnitt 134 und die Füße 132 können in axialer Richtung 142 über die Trommel 106 vorstehend ausgebildet werden, so dass, wenn die Kabeltrommel 100 auf die Vorderseite fällt oder gelegt wird, die Steckdosen 108 nicht den Untergrund berühren. Die Trommel 106 weist auf ihrem als Drehfläche ausgebildeten Drehkörper 110 die vier Steckdosen 108 sowie einen aus dieser herausklappbaren Zapfen 148 auf, um die Trommel 106 mit Hilfe des Zapfens 148 zu drehen (beispielsweise um das Kabel 102 wieder auf die Trommel 106 aufzurollen). Die vier Steckdosen 108 weisen untereinander den gleichen Abstand auf, sind im Quadrat angeordnet und jeweils durch einen jeweiligen der Deckel 120 verschließbar. Die Steckdosen 108 stehen über die Drehfläche bzw. über den Drehkörper 110 hervor. In radialer Richtung sind jeder Steckdose 108 jeweils zwei Ablaufrinnen 112 als Regenabläufe zugeordnet, die entlang ihres radialen Verlaufs in axialer Richtung 142 abfallend gebildet sind, d.h. zum gegenüberliegenden axialen Ende der Trommel 106 geneigt sind. Die übrigen zurückversetzten Flächen (d.h. die flächigen Vertiefungen 140 um die Steckdosen 108 in dem zentralen kreisförmigen Bereich) sind nicht geneigt, d.h. verlaufen senkrecht zur axialen Richtung 142. Zwischen den Ablaufrinnen 112 sind entlang des äußeren Umfangs die axial erhöhten Schutzabschnitte 114 gebildet, die in axialer Richtung 142 ansteigen, wenn man sich gedanklich radial nach außen bewegt. Diese Schutzabschnitte 114 schützen die Steckdosen 108 und die Ablaufrinnen 112 vor mechanischen Einflüssen, beispielsweise wenn die Kabeltrommel 100 auf die Vorderseite fällt. Der Drehkörper 110 (bzw. die Drehfläche, vorliegend ein Drehteller), der die Ablaufrinnen 112, die Schutzabschnitte 114 und die Steckdosen 108 trägt, ist auf die Trommel 106 aufgeschraubt. Zwischen dem Drehkörper 110 und der Trommel 106 kann die flüssigkeitsdichte Dichtung 116 vorgesehen sein, um das Innere der Trommel 106 und den elektrischen Bauraum 118 vor äußeren Einflüssen zu schützen. Beispielsweise kann die Flüssigkeitsdichtung 116 durch einen O-Ring, angespritzte Weichkomponenten oder auch Labyrinthdichtungen realisiert sein. Ein Knopf in dem Drehkörper 110 ist einem Thermoschutzschalter 150 zugehörig, der die Leitungen der Trommel 106 vor Überhitzung schützt. Die Steckdosen 108, der Thermoschutzschalter 150 und gegebenenfalls eine Betriebsanzeige 154 können mit Vorteil wassergeschützt angeordnet werden, d.h. abgedichtet.

Ein vorderer Abschnitt des Griffabschnitts 134 kann lösbar mit dem übrigen Abschnitt des Basiskörpers 122 verbunden sein, um selektiv diesen vorderen Abschnitt austauschbar zu gestalten (dieser steht über die Trommel 106 hervor und ist stark mechanisch belastet, zum Beispiel bei einem Fallen der Kabeltrommel 100).

Die Füße 132 können Profilierungen verschiedener Art aufweisen, damit ein sicherer Tritt mit einem Fuß eines Anwenders auf die Füße 132 der Kabeltrommel 100 erfolgen kann.

Die insbesondere als Kugellager ausgebildeten Lager 126 können noch gekapselt sein, um diese zusätzlich vor Staub zu schützen.

Hinter dem Verschlussdeckel 144 für den Lagerzapfen 146 können im Trommelhalteabschnitt 124 Kunststoffdome oder andere Befestigungsstrukturen vorgesehen sein, um Haltemöglichkeiten für die Kabeltrommel 100 daran zu befestigen. Beispielsweise können Haken mittels Schrauben an diesen Kunststoffdomen befestigt werden, um die Kabeltrommel 100 beispielsweise an einem Gerüst oder einer Wand zu halten.

Zwischen der Trommel 106 und dem Lagerzapfen 146 können Filzabschnitte als Reibungserzeugungseinrichtung 128 angeordnet werden, die als eine Art Bremse die Leichtläufigkeit der Trommel 106 regulieren (alternativ können Scheiben, zum Beispiel Beilegscheiben, mit strukturierter Oberfläche verwendet werden, die dann für verschiedene Reibungskoeffizienten an der Lagerfläche sorgen).

Am oberen Ende des Trommelhalteabschnitts 124 im Übergang zu dem Griffabschnitt 134 können sich senkrecht zur axialen Richtung 142 erstreckende und frei liegende Stege angebracht werden, um die Kabeltrommel 100 beispielsweise mittels Kabelbinder an einem Gerüst zu befestigen.

Auf die Schutzabschnitte 114 kann eine Weichkomponente aufgespritzt sein, um Beschädigungen zu vermeiden.

Vorzugsweise können die zurückversetzten Flächen in dem Drehkörper 110, welche die Ablaufrinnen 112 (und gegebenenfalls die flächige Vertiefung 140) bilden, von einem Mittelpunkt nach radial außen abfallend geneigt ausgebildet werden.

Mit Vorteil kann die Kabeltrommel 100, von ihren elektrischen Komponenten abgesehen, vollständig aus Kunststoffspritzteilen gefertigt sein, um größtmögliche elektrische Sicherheit zu gewährleisten.

Der Verschlussdeckel 144 des Trommelhalteabschnitts 124 kann als Arbeitsleuchte gestaltet sein, so dass ein Anwender diese einschalten kann, um seinen Arbeitsbereich auszuleuchten.

Hinter dem Verschlussdeckel 144 kann ein USB-Anschluss vorgesehen sein, um ein Mobilfunkgerät oder dergleichen aufzuladen.

Der Raum hinter dem Verschlussdeckel 144 kann auch als Aufbewahrungsraum gestaltet sein, um beispielsweise ein Ladekabel für ein Mobilfunkgerät oder dergleichen daran zu lagern.

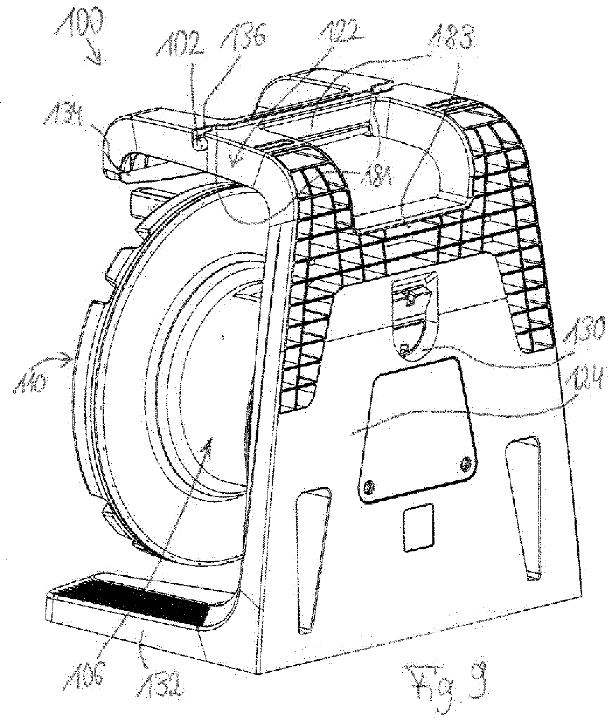

**Figur 9** zeigt eine räumliche Ansicht einer Kabeltrommel 100 gemäß einem anderen Ausführungsbeispiel der Erfindung. **Figur 10** zeigt eine andere räumliche Ansicht der Kabeltrommel 100 gemäß Figur 9.

Gemäß Figur 9 und Figur 10 ist ein U-förmiger Standfuß geschaffen. Ferner ist bei diesem Ausführungsbeispiel keine Betriebsanzeige 154 in dem Drehkörper 110 integriert.

Mit Bezugszeichen 183 ist in Figur 9 eine Lasche dargestellt, die zum Befestigen bzw. Durchführen eines Körpers ausgebildet ist.

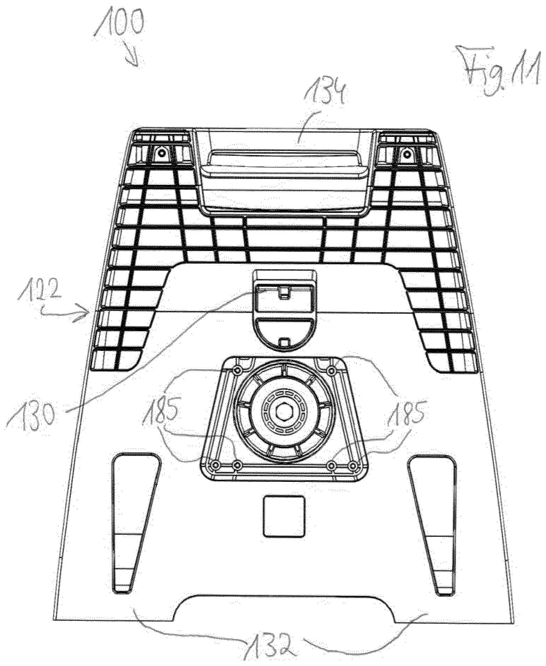

**Figur 11** zeigt eine rückseitige Ansicht einer Kabeltrommel 100 gemäß einem exemplarischen Ausführungsbeispiel der Erfindung, die an der Rückseite freigelegte Schraubdome 185 aufweist. Die Darstellung gemäß Figur 11 kann erhalten werden, wenn ausgehend von der Konfiguration gemäß Figur 1 eine Abdeckplatte 187 abgenommen wird. Zu erkennen sind in Figur 11 sechs Schraubdome 185, um Haltemöglichkeiten für die Kabeltrommel 100 daran zu befestigen.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Kabeltrommel (100), wobei die Kabeltrommel (100) aufweist:
ein Kabel (102) mit einem Stecker;
eine Trommel (106) zum Aufrollen des Kabels (102);
mindestens eine Steckdose (108), die mit dem Kabel (102) elektrisch gekoppelt ist;
einen Drehkörper (110), an dem die mindestens eine Steckdose (108) angebracht und der derart betätigbar ist, dass mittels Betätigens des Drehkörpers (110) das Kabel (102) auf die Trommel (106) aufrollbar ist,
**gekennzeichnet durch**
eine Mehrzahl von offenen, radial verlaufenden Ablaufrinnen (112) an dem Drehkörper (110) zum Abführen von Flüssigkeit von dem Drehkörper (110);
wobei der Drehkörper (110) mit den offenen Ablaufrinnen (112) so ausgebildet ist, dass dem Drehkörper (110) zugeführte Flüssigkeit entlang den offenen Ablaufrinnen (112) mittels eines Gefälles abgeführt wird, ohne sich im Bereich der mindestens einen Steckdose (108) zu stauen; und
wobei entlang des äußeren Umfangs des Drehkörpers (110) zwischen den offenen, radial verlaufenden Ablaufrinnen (112) Schutzabschnitte (114) des Drehkörpers (110) vorgesehen sind, die in axialer Richtung (142) der Trommel (106), insbesondere auch gegenüber der mindestens einen Steckdose (108), hervorstehen, wobei die offenen Ablaufrinnen (112) an dem Drehkörper (110) radial nach außen hin in einer axialen Richtung (142) der Trommel (106) abfallen.

2. Kabeltrommel (100) gemäß Anspruch 1, wobei jeder der mindestens einen Steckdose (108) mindestens zwei offene Ablaufrinnen (112) zugeordnet sind.

3. Kabeltrommel (100) gemäß einem der Ansprüche 1 bis 2, wobei die mindestens eine Steckdose (108) in axialer Richtung (142) der Trommel (106) gegenüber den Ablaufrinnen (112) überstehend ausgebildet ist.

4. Kabeltrommel (100) gemäß einem der Ansprüche 1 bis 3, aufweisend zumindest eines der folgenden Merkmale:
wobei der Drehkörper (110) als Drehteller ausgebildet ist;
wobei der Drehkörper (110), insbesondere drehfest, an der Trommel (106) befestigt ist, insbesondere aufweisend eine flüssigkeitsdichte Dichtung (116) zwischen dem Drehkörper (110) und der Trommel (106), die zum Unterbinden eines Eindringens von Flüssigkeit in einen elektrischen Bauraum (118) der Trommel (106) ausgebildet ist, wobei weiter insbesondere der elektrische Bauraum (118) zumindest einen Abschnitt von zumindest einem aus der Gruppe aufnimmt, die besteht aus einem Thermoschutzschalter (150), einer Betriebsanzeige (154), einer elektrischen Kopplungseinrichtung zum elektrischen Koppeln des Kabels (102) mit der mindestens einen Steckdose (108), einem USB-Anschluss, einer Ladeeinrichtung für ein Mobiltelefon und einer Leuchte;
wobei die mindestens eine Steckdose (108) einen abnehmbaren oder abklappbaren Deckel (120) aufweist, der, insbesondere flüssigkeitsdicht, auf die Steckdose (108) aufsetzbar ist.

5. Kabeltrommel (100) gemäß einem der Ansprüche 1 bis 4, wobei die Mehrzahl von offenen Ablaufrinnen (112) jeweils als mindestens eine durchgehend offene Nut in einer nach außen hin offenen Stirnfläche des Drehkörpers (110) ausgebildet sind.

6. Kabeltrommel (100) gemäß einem der Ansprüche 1 bis 5, wobei der Drehkörper (110) kreisscheibenförmig mit mehreren, insbesondere vier, umfänglich angeordneten Steckdosen (108) mit jeweils mindestens zwei sich in Radialrichtung erstreckenden und radial abschüssigen Ablaufrinnen (112) ausgebildet ist.

7. Kabeltrommel (100) gemäß einem der Ansprüche 1 bis 6, aufweisend einen Basiskörper (122) mit einem Trommelhalteabschnitt (124), an dem die Trommel (106) drehbar gelagert ist.

8. Kabeltrommel (100) gemäß Anspruch 7, aufweisend zumindest eines der folgenden Merkmale:
aufweisend mindestens ein Lager (126), insbesondere mindestens ein Kugellager und/oder mindestens ein Kegelrollenlager, das zum drehfähigen Lagern der Trommel (106) an dem Trommelhalteschnitt (124) ausgebildet ist, vorzugsweise ausgebildet als gekapseltes Lager (126), insbesondere aufweisend eine, insbesondere flüssigkeitsdichte, Reibungserzeugungseinrichtung (128), insbesondere ein Filzkörper oder eine Scheibe mit strukturierter Oberfläche, zum Beaufschlagen des mindestens einen Lagers (126) mit einer, insbesondere einstellbaren, Reibungskraft;
wobei der Trommelhalteabschnitt (124) mindestens eine Montagestruktur (130) zum Montieren der Kabeltrommel (100) an einem Montagekörper, insbesondere an einer Wand oder an einem Gerüst, aufweist;
wobei der Basiskörper (122) mindestens einen insbesondere elektrisch isolierenden Fuß (132), insbesondere zwei Füße (132), aufweist, wobei der mindestens eine Fuß (132) zum Aufsetzen der Kabeltrommel (100) auf einen Untergrund ausgebildet ist, wobei insbesondere der mindestens eine Fuß (132) in axialer Richtung (142) der Trommel (106) über den Drehkörper (110), und insbesondere auch über die mindestens eine Steckdose (108), übersteht.

9. Kabeltrommel (100) gemäß Anspruch 7 oder 8, wobei der Basiskörper (122) einen Griffabschnitt (134) aufweist, der zum Greifen der Kabeltrommel (100) durch einen Benutzer ausgebildet ist.

10. Kabeltrommel (100) gemäß Anspruch 9, aufweisend zumindest eines der folgenden Merkmale:
wobei der Griffabschnitt (134) in axialer Richtung (142) der Trommel (106) über den Drehkörper (110), und insbesondere auch über die mindestens eine Steckdose (108), übersteht;
wobei der Griffabschnitt (134) einen Kabelhalteabschnitt (136) zum lösbaren Halten eines Endabschnitts des Kabels (102) aufweist;
wobei der Griffabschnitt (134) von dem Basiskörper (122) abnehmbar angebracht ist.

11. Kabeltrommel (100) gemäß einem der Ansprüche 1 bis 10, wobei zumindest eines aus der Gruppe bestehend aus der Trommel (106), dem Drehkörper (110) und der mindestens einen Ablaufrinne (112) zumindest teilweise als Spritzgussteil ausgebildet ist.

## Claims

1. Cable drum (100), wherein the cable drum (100) has:
a cable (102) having a plug connector;
a drum (106) for reeling the cable (102);
at least one plug socket (108) electrically coupled to the cable (102);
a rotary body (110), to which the at least one plug socket (108) is attached and which can be actuated in such a way that the cable (102) can be reeled onto the drum (106) by actuating the rotary body (110),
**characterized by**
a plurality of open, radially extending discharge channels (112) on the rotary body (110) for discharging liquid from the rotary body (110);
wherein the rotary body (110) with the open discharge channels (112) is formed such that liquid supplied to the rotary body (110) is discharged along the open discharge channels (112) by means of a slope without accumulating in the area of the at least one plug socket (108); and
wherein protective sections (114) of the rotary body (110) are provided along the outer circumference of the rotary body (110) between the open, radially extending discharge channels (112), which protective sections project in the axial direction (142) of the drum (106), in particular also relative to the at least one plug socket (108), wherein the open discharge channels (112) on the rotary body (110) slope down radially outwards in an axial direction (142) of the drum (106).

2. Cable drum (100) according to claim 1, wherein at least two open discharge channels (112) are associated to each one of the at least one plug socket (108).

3. Cable drum (100) according to any one of the claims 1 to 2, wherein the at least one plug socket (108) is configured to project in an axial direction (142) of the drum (106) with respect to the discharge channels (112).

4. Cable drum (100) according to any one of the claims 1 to 3, having at least one of the following features:
wherein the rotary body (110) is configured as a rotary plate;
wherein the rotary body (110) is fixed, in particular in a rotationally fixed manner, to the drum (106), in particular having a liquid-tight seal (116) between the rotary body (110) and the drum (106), which seal is configured to prevent a penetration of liquid into an electrical installation space (118) of the drum (106), wherein further in particular the electrical installation space (118) accommodates at least a section of at least one of the group consisting of a thermal circuit breaker (150), an operation display (154), an electrical coupling device for electrically coupling the cable (102) to the at least one plug socket (108), a USB connection, a charging device for a portable telephone and a lamp;
wherein the at least one plug socket (108) has a removable or hingeable cap (120), which is placeable on the plug socket (108), in particular in a liquid-tight manner.

5. Cable drum (100) according to any one of the claims 1 to 4, wherein the plurality of open discharge channels (112) are each formed as at least one continuous open groove in an end face, which is open to the outside, of the rotary body (110).

6. Cable drum (100) according to any one of the claims 1 to 5, wherein the rotary body (110) is formed in the shape of a circular disc with a plurality, in particular four, circumferentially arranged plug sockets (108) each having at least two radially extending and radially sloping discharge channels (112).

7. Cable drum (100) according to any one of the claims 1 to 6, having a base body (122) having a drum holding section (124), on which the drum (106) is rotatably supported.

8. Cable drum (100) according to claim 7, having at least one of the following features:
having at least one bearing (126), in particular at least one ball bearing and/or at least one taper roller bearing, which is configured for rotatably supporting the drum (106) on the drum holding section (124), preferably configured as an encapsulated bearing (126), in particular comprising an, in particular liquid-tight, friction generating device (128), in particular a felt body or a disc having a structured surface, for applying an, in particular adjustable, friction force on the at least one bearing (126);
wherein the drum holding section (124) has at least one mounting structure (130) for mounting the cable drum (100) to a mounting body, in particular to a wall or to a scuffold;
wherein the base body (122) has at least one, in particular electrically insulating foot (132), in particular two feet (132), wherein the at least one foot (132) is configured for putting the cable drum (100) on an underground, wherein in particular the at least one foot (132) projects in the axial direction (142) of the drum (106) beyond the rotary body (110), and in particular also beyond the at least one plug socket (108).

9. Cable drum (100) according to claim 7 or 8, wherein the base body (122) has a grip section (134), which is configured for gripping the cable drum (100) by a user.

10. Cable drum (100) according to claim 9, having at least one of the following features:
wherein the grip section (134) projects in the axial direction (142) of the drum (106) beyond the rotary body (110), and in particular also beyond the at least one plug socket (108);
wherein the grip section (134) has a cable holding section (136) for releasably holding an end section of the cable (102);
wherein the grip section (134) is mounted detachably from the base body (122).

11. Cable drum (100) according to any one of the claims 1 to 10, wherein at least one of the group consisting of the drum (106), the rotary body (110) and the at least one discharge channel (112) is at least partially formed as an injection molded part.

## Revendications

1. Touret de câble (100), **caractérisé en ce que** le touret de câble (100) présente :
un câble (102) avec une fiche ;
un touret (106) pour enrouler le câble (102) ;
au moins une prise de courant (108), qui est couplée de manière électrique au câble (102) ;
un corps rotatif (110), au niveau duquel au moins une prise de courant (108) est installée et qui peut être actionné de telle manière que le câble (102) peut être enroulé sur le touret (106) au moyen d'un actionnement du corps rotatif (110),
**caractérisé par**
une multitude de gouttières (112) ouvertes s'étendant de manière radiale au niveau du corps rotatif (110) pour évacuer du liquide du corps rotatif (110) ;
dans lequel le corps rotatif (110) est réalisé de telle sorte avec les gouttières (112) ouvertes que du liquide amené au corps rotatif (110) est évacué le long des gouttières (112) ouvertes au moyen d'une pente sans s'accumuler dans la zone d'au moins une prise de courant (108) ; et
dans lequel sont prévues, le long de la périphérie extérieure du corps rotatif (110) entre les gouttières (112) ouvertes s'étendant de manière radiale, des sections de protection (114) du corps rotatif (110), qui font saillie, dans une direction axiale (142) du touret (106), en particulier également par rapport à au moins une prise de courant (108), dans lequel les gouttières (112) ouvertes tombent au niveau du corps rotatif (110) radialement vers l'extérieur dans une direction axiale (142) du touret (106).

2. Touret de câble (100) selon la revendication 1, **caractérisé en ce qu'**au moins deux gouttières (112) ouvertes sont associées à chacune de la ou des prises de courant (108).

3. Touret de câble (100) selon l'une quelconque des revendications 1 à 2, **caractérisé en ce qu'**au moins une prise de courant (108) est réalisée en saillie dans une direction axiale (142) du touret (106) par rapport aux gouttières (112).

4. Touret de câble (100) selon l'une quelconque des revendications 1 à 3, présentant au moins une des caractéristiques suivantes :
**caractérisé en ce que** le corps rotatif (110) est réalisé en tant que plateau tournant ;
dans lequel le corps rotatif (110) est fixé, en particulier de manière solidaire en rotation, au niveau du touret (106), en particulier en présentant un joint d'étanchéité (116) étanche aux liquides entre le corps rotatif (110) et le touret (106), qui est réalisé pour empêcher une entrée de liquide dans un espace de montage (118) électrique du touret (106), dans lequel par ailleurs en particulier l'espace de montage (118) électrique accueille au moins une section d'au moins un élément issu du groupe, qui est constitué d'un commutateur de protection thermique (150), d'un indicateur de fonctionnement (154), d'un dispositif de couplage électrique pour coupler de manière électrique le câble (102) à au moins une prise de courant (108), d'un port USB, d'un dispositif de charge pour un téléphone mobile et d'un système d'éclairage ;
dans lequel au moins une prise de courant (108) présente un couvercle (120) pouvant être retiré ou rabattu, qui peut être placé, en particulier de manière étanche aux fluides, sur la prise de courant (108).

5. Touret de câble (100) selon l'une quelconque des revendications 1 à 4, **caractérisé en ce que** la multitude de gouttières (112) ouvertes sont réalisées respectivement en tant qu'une ou plusieurs rainures ouvertes en continu dans une surface frontale ouverte vers l'extérieur du corps rotatif (110).

6. Touret de câble (100) selon l'une quelconque des revendications 1 à 5, **caractérisé en ce que** le corps rotatif (110) est réalisé en forme de disque circulaire avec plusieurs prises de courant (108), en particulier quatre, disposées en périphérie avec respectivement au moins deux gouttières (112) s'étendant dans une direction et selon une pente radiales.

7. Touret de câble (100) selon l'une quelconque des revendications 1 à 6, présentant un corps de base (122) avec une section de maintien de touret (124), au niveau de laquelle le touret (106) est monté de manière à pouvoir tourner.

8. Touret de câble (100) selon la revendication 7, comportant au moins une des caractéristiques suivantes :
présentant au moins un palier (126), en particulier au moins un roulement à billes et/ou au moins un roulement à rouleaux coniques, qui est réalisé pour supporter de manière rotative le touret (106) au niveau de la section de maintien de touret (124), de préférence réalisé en tant que palier (126) encapsulé, en particulier comprenant un dispositif de génération de frottement (128), en particulier étanche aux liquides, en particulier un corps en feutre ou un disque avec une surface structurée, pour soumettre au moins un palier (126) à l'action d'une force de frottement, pouvant être en particulier réglée ;
**caractérisé en ce que** la section de maintien de touret (124) présente au moins une structure de montage (130) pour monter le touret de câble (100) au niveau d'un corps de montage, au particulier au niveau d'une paroi ou d'une armature ;
dans lequel le corps de base (122) comporte au moins un pied (132) en particulier à isolation électrique, en particulier deux pieds (132), dans lequel au moins un pied (132) est réalisé pour placer le touret de câble (100) sur un sol, dans lequel en particulier au moins un pied (132) fait saillie, dans une direction axiale (142) du touret (106), du corps rotatif (110), et en particulier également d'au moins une prise de courant (108) .

9. Touret de câble (100) selon la revendication 7 ou 8, **caractérisé en ce que** le corps de base (122) présente une section formant poignée (134), qui est réalisée pour la préhension du touret de câble (100) par un utilisateur.

10. Touret de câble (100) selon la revendication 9, présentant au moins une des caractéristiques suivantes :
**caractérisé en ce que** la section formant poignée (134) fait saillie, dans une direction axiale (142) du touret (106), du corps rotatif (110), et en particulier également d'au moins une prise de courant (108) ;
dans lequel la section formant poignée (134) présente une section de maintien de câble (136) pour maintenir de manière amovible une section d'extrémité du câble (102) ;
dans lequel la section formant poignée (134) est installée de manière à pouvoir être retirée du corps de base (122).

11. Touret de câble (100) selon l'une quelconque des revendications 1 à 10, **caractérisé en ce qu'**au moins un élément issu du groupe constitué du touret (106), du corps rotatif (110) et d'au moins une gouttière (112) est réalisé au moins en partie en tant que pièce moulée par injection.
